# EUROPEAN PATENT APPLICATION

(11) **EP 3 991 950 A1**
(43) Date of publication of application: **04.05.2022**
(21) Application number: 21199514.7
(22) Date of filing: 28.09.2021
(51) Int. Cl.: B29C 65/82, B29C 65/08, B29C 65/78, G01N 21/84, G01N 21/956, B29L 31/48

(54) **A METHOD AND AN APPARATUS FOR CHECKING A WELDING IN AN ARTICLE MADE OF A POLYMERIC MATERIAL**

(30) Priority: 29.12.2020 IT 202000032552
(71) Applicant: GDM S.P.A., 40133 Bologna (IT)
(72) Inventor: PIANTONI, Matteo, 24021 Albino (BG) (IT); ZAVALLONI, Alessandro, 26028 Sesto ed Uniti (CR) (IT); TARABINI, Marco, 23826 Mandello del Lario (LC) (IT); CONESE, Chiara, 70216 Bari (IT); BRAMBILLA, Paolo, 23874 Montevecchia (LC) (IT)
(74) Representative: Porta & Consulenti Associati S.p.A.

(57) **Abstract**

Method and apparatus for controlling a weld (22) in an article (20) made of a polymeric material, wherein it is envisaged of:
- acquiring an image of at least a portion of the article (20),
- processing the acquired image represented by a pixel matrix wherein a level of intensity is associated to each pixel, the processing comprising:
• recognising weld zones in the acquired image,
• extracting image data related to pixel intensity levels which correspond to the recognised weld zones,
• assessing a quality parameter of the weld (22), relating the image data extracted to respective tightness stress values of the weld (22).

## Description

The present invention relates to a method and apparatus for controlling the quality of a weld in an article made of a polymeric material, and to a production line comprising such a control apparatus.

Articles made of a polymeric material can be, for example, containers or wraps for solid, liquid or semi-solid food products or adsorbent hygiene articles.

Containers or wraps for food products may comprise, for example, bottles and bricks of liquid beverages, pouches for solid or semi-solid food products, coffee pods and/or capsules or other beverages for infusion, wraps for candies, chocolates and the like.

Absorbent hygiene articles, such as baby nappies, pads for incontinent people and the like typically have a front part, wearable on the front part of the user's body, a back part, wearable on the back of the user's body and a central part arranged between the front part and the back part and wearable between the user's legs.

Structurally, an adsorbent hygiene article comprises at least two primary elements extending longitudinally from the front part to the back part of the adsorbent hygiene article. The primary elements include an upper element and a lower element, respectively called "topsheet" and "backsheet" in the jargon of the sector, overlaying and constrained between each other. Both the upper element and the lower element are substantially rectangular in shape.

An adsorbent core is disposed between the upper element and the lower element. This adsorbent core has the function of absorbing the body fluids that pass through the upper element and of retaining them without loss even for several hours.

Intermediate elements can be interposed between the upper element and lower element.

Typically, the articles of the type described above are produced in a production line where one or more welds are required to be made in order to constrain different elements of these articles or different parts of the same element between each other. For example, such welds may be made to constrain between each other at least part of the above-described elements of an adsorbent hygiene article, or several layers of a wrap or container, or two parts (e.g., two flaps) of a wrap or container.

The present invention forms part of quality controls carried out on articles made of a polymeric material, aimed at verifying their compliance with design specifications and, in particular, at verifying the quality of welds made in such articles on the basis of a quality parameter.

Currently, a quality control of such welds is carried out off the production line on sample products by mechanically measuring, by means of conventional tensile tests, the maximum tensile strength that the weld can withstand until failure, as a quality parameter.

With respect to such a solution, the Applicant perceived the need to improve the quality control of the welds in articles made of a polymeric material, in particular in terms of efficiency, precision and quality.

The Applicant observed that in the articles made of a polymeric material the weld zones are visible to the naked eye. Based on this observation, the Applicant investigated the possibility of recognising and analysing the welds made in an article made of a polymeric material by acquiring and processing images of the article. During his investigations, the Applicant found that there is a correspondence between the intensity of the pixels of the acquired image of the article and the weld zones in the image and that the intensity of the pixels related to the weld zones relates with the strength of the welds in terms of the tightness stress thereof.

The Applicant has therefore found that the aforesaid requirement can be fulfilled by an automated control system based on an image acquisition system and a processing of the acquired images adapted to assess a quality parameter of the weld in terms of the tightness stress thereof.

The present invention therefore relates, in a first aspect thereof, to a method for controlling a weld in an article made of a polymeric material.

Preferably, an image of at least a portion of the article is envisaged to be acquired.

Preferably, it is envisaged to process the acquired image.

Preferably, the acquired image is represented by a pixel matrix wherein a level of intensity is associated to each pixel.

Preferably, processing the acquired image comprises recognising weld zones in the acquired image.

Preferably, processing the acquired image comprises extracting image data related to the recognised weld zones.

In a preferred embodiment, the extracted image data are related to pixel intensity levels which correspond to the recognised weld zones.

Preferably, processing the acquired image comprises assessing a quality parameter of the weld by relating the extracted image data to respective tightness stress values of the weld.

In a second aspect thereof, the present invention relates to an apparatus for controlling a weld in an article made of a polymeric material.

Preferably, an image acquisition device configured to acquire an image of at least a portion of the article is provided.

Preferably, a processor configured to process the acquired image is provided.

Preferably, the acquired image is represented by a pixel matrix wherein a level of intensity is associated to each pixel.

Preferably, the processor is configured to process the acquired image so as to recognise weld zones in the acquired image.

Preferably, the processor is configured to process the acquired image so as to extract image data related to the recognised weld zones.

In a preferred embodiment, the extracted image data are related to pixel intensity levels which correspond to the recognised weld zones.

Preferably, the processor is configured to process the acquired image so as to assess a quality parameter of the weld by relating the extracted image data to respective tightness stress values of the weld.

In a third aspect thereof, the present invention relates to a line for producing articles made of polymeric material.

Preferably, the line comprises a fixing device configured to perform welds in the adsorbent hygiene articles.

Preferably, the line comprises a control apparatus.

Preferably, the control apparatus comprises an image acquisition device configured to acquire images of at least one portion of each article.

Preferably, the apparatus comprises a processor configured to process the acquired images so as to assess, for each article, a quality parameter of the welds performed by the fixing device in terms of their tightness stress.

The Applicant observes that thanks to the aforesaid expedients it is possible to assess the quality of the welds in articles made of a polymeric material, in terms of their tightness stress, without having to intervene mechanically and manually on the articles by means of conventional tensile tests.

This advantageously allows to test, in-line and in an automated way, all the articles produced by the production line without limiting oneself to sample articles since the required method is not invasive and provides for processing times of the acquired images lower than the execution times of conventional tensile tests. It is therefore possible to have real-time information on the quality of the welds of the articles produced and, therefore, to intervene promptly on the production line when they begin to show defects and/or deviations from the optimal condition.

In addition, the use of *machine vision* techniques for assessing the tightness stress of the welds in the articles made of a polymeric material makes it possible to identify defects and/or deviations from the quality standards that are not directly attributable to parameters of the welding process, such as defects related to welder wear.

Overall, the above-mentioned objectives of improving the quality control of the welds in articles made of a polymeric material are thus achieved, in particular in terms of efficiency, precision and quality.

In the remainder of this description and in the subsequent claims, "tightness stress" referred to a weld means a maximum stress that the weld is capable of withstanding until failure. Preferably, the stress is a tensile strength.

An "image" is generally understood to be a set of data, typically contained in a computer file, in which each coordinate tuple (typically each pair of coordinates) of a finite set (typically two-dimensional and matrix, i.e. N rows by M columns) of spatial coordinate tuples (each tuple corresponding to a "pixel") is associated with a corresponding set of numerical values (which may be representative of quantities of different types). For example, in monochrome images (such as grayscale images) such a set of values consists of a single value on a finite scale (typically 256 levels or tones from 0 (black) to 255 (white)), such a value being representative of the intensity (or brightness) level of the respective spatial coordinate tuple when displayed. A further example is represented by the colour images, wherein the set of values represents the intensity level of a multiplicity of colours, or channels, typically the fundamental colours (e.g., red, green and blue in RGB coding, cyan, magenta, yellow and black in CMYK coding). The term 'image' does not necessarily imply the actual display thereof.

"Polymeric material" refers to a material made of natural or synthetic polymer.

The term "article" means a finished article or an article in process, i.e., at any phase of the relative production process within a production line.

The "advancement direction" referred to an article within a production line means a direction of movement of such an article within that line. For example, in the case of an article being moved on a conveyor belt, it is intended to indicate a direction of movement of that conveyor belt.

The expressions "downstream" and "upstream" refer to the aforesaid advancement direction. Therefore, assuming for example a straight advancement direction from left to right, a "downstream" position with respect to an element or reference point is any position to the right of said element or reference point and an "upstream" position with respect to an element or reference point is any position arranged to the left of said element or reference point. In the case of a circular advancement direction, referring for example to a clockwise rotation, a position "downstream" with respect to an element or reference point is any position following that element or reference point and a position "an upstream" with respect to an element or reference point is any position that precedes said element or reference point.

The present invention may have, in the aspects discussed above, at least one of the preferred features described below. Such features may therefore be present singly or in combination with each other, unless expressly stated otherwise, both in the method of the first aspect of the present invention and in the apparatus of the second aspect of the present invention and in the line of the third aspect of the present invention.

Preferably, a level of intensity is associated with each pixel, e.g., a grey-level intensity value (typically 256 levels or tones from 0 (black) to 255 (white)).

Preferably, the image data extracted comprise at least an average intensity level of the intensity levels of the pixels which correspond to the weld zones recognised for the image acquired in its entirety or for a predefined area of the image acquired.

In particular, in one embodiment, the extracted image data comprises an average intensity level of the intensity levels of all pixels which correspond to the recognised weld zones in the acquired image in its entirety. In an alternative embodiment, the acquired image may be subdivided into a plurality of predefined areas, and the extracted image data may comprise a corresponding plurality of average intensity levels, each average intensity level representing the average value of the intensity levels of all pixels which correspond to the recognised weld zones for the respective area of said plurality of predefined areas.

Preferably, the extracted image data are related to respective values of tensile strength of the weld.

Preferably, recognising the weld zones in the acquired image comprises filtering operations.

Preferably, the filtering operations are adapted to increase the uniformity (more preferably, in terms of intensity levels of the pixels) of the weld zones in the acquired image. This advantageously allows reducing the inhomogeneities that characterise the texture of a welded material.

Preferably, the filtering operations comprise an iterative filtering of the acquired image whereby the entire image is filtered against a threshold parameter, representative of weldless zones. This advantageously allows to increase the contrast (more preferably, in terms of intensity levels of the pixel) between welded and weldless zones in the acquired image.

The recognition of the weld zones in the acquired image may comprise the application of mathematical morphology functions adapted to localise (i.e., identify the position with respect to a coordinate system of the pixel matrix) the weld zones within the pixel matrix.

In one embodiment, recognising the weld zones in the acquired image comprises a localisation operation (i.e., identifying the position with respect to a coordinate system of the pixel matrix) of each weld zone within of the pixel matrix.

Preferably, the localisation operation is carried out on the basis of the pixel intensity (e.g. using appropriate thresholds considering that the welding spots generally correspond to darker pixels with lower intensity grey levels, close to zero) and/or on the basis of information related to the welding pattern (e.g. in the case of ultrasonic welding, this pattern is defined by the position and conformation of the anvil pins).

Preferably, it is envisaged, during said acquisition, to illuminate said article. This advantageously allows to increase the contrast between welded zones and weldless zones.

Preferably, the lightening is a grazing lightening of the article.

In an alternative embodiment, the lightening is a substantially perpendicular lightening (preferably a backlight) of the article.

Preferably, the lighting is such that it illuminates the article in an even way.

Preferably, the welding is ultrasonic welding. Alternatively, the welding may be a thermomechanical welding.

Preferably, it is envisaged to repeat the image acquisition and the processing on several portions of the article.

In one embodiment, it is envisaged to acquire multiple images of the same portion of the article and to process a combination of such multiple images.

Preferably, a support surface is provided for the article.

The support surface for the article can be flat or curved.

The support surface can be moved along a working direction. The working direction can be straight or circular.

The support surface can be defined by a flat surface of a conveyor belt or by a curved surface of a forming support. The forming support may comprise, for example, a drum rotatable about a rotation axis.

Preferably, a lighting system is provided.

Preferably, the lighting system comprises lighting devices configured to achieve a grazing and even lightening of the article.

Preferably, the lighting system comprises lighting devices placed on two opposite sides of the support surface for the article.

Preferably, the lighting devices are placed on two opposite sides of the support surface with respect to the working direction of such a support surface.

Preferably, the lighting devices are placed at the same height with respect to the support surface.

These latter characteristics of the lighting devices taken individually or, preferably, together advantageously allow achieving an even lightening of the article.

Preferably, the image acquisition device faces the support surface for the article.

Preferably, the image acquisition device has an optical axis substantially perpendicular to the support surface for the article. In the case of a curved support surface, it is understood that the optical axis is substantially perpendicular to a plane tangent to the curved support surface at the point where the optical axis meets this support surface.

Preferably, the image acquisition device comprises a digital camera, e.g., comprising a CCD or CMOS sensor.

The article made of a polymeric material can be an adsorbent hygiene article or a container or wrap for food products.

The polymeric material may be a natural polymeric material, such as cotton, cellulose and derivatives, or a synthetic polymeric material such as, for example, polyolefins (e.g., polyethylene and polypropylene), polyesters (e.g., polyethylene terephthalate and polylactic acid), polyamides, acrylics, polyethers and copolymers of two or more of the materials cited as examples.

Preferably, the article comprises one or more elements.

Preferably, said one or more elements are tape-like.

Preferably, said one or more elements are made of said polymeric material.

Preferably, at least one of the elements of the article is made of a tissue comprising, for example, wholly or partly, cotton fibres and/or polyolefins (in particular polyethylene and/or polypropylene), cellulose fibres (and derivatives), polyester fibres (for example of polyethylene terephthalate and/or polylactic acid), polyamide fibres, acrylic fibres, polyether fibres and/or copolymers of two or more of the materials cited as examples.

Preferably, at least one of the elements of the article is made of a non-woven tissue, for example comprising wholly or partly cellulose fibres (and derivatives) and/or polyolefin fibres (in particular, of polyethylene and/or polypropylene) and/or polyester (for example, polyethylene terephthalate and/or polylactic acid) and/or copolymers of two or more of the materials cited as examples.

Preferably, welding is performed to constrain at least part of said elements or more portions of the same element between each other.

Preferably, the welding is intended to constrain said elements between each other which are at least partially overlaying one another (e.g., layered between them).

Preferably, the welding is adapted to constrain between each other morel portions (such as two flaps) of the same element that are at least partially overlaying one another.

Preferably, at least one of the elements of the article is made of a thermoplastic material such as, for example, polyethylene or polypropylene or bioplastics.

When the article is an adsorbent hygiene article, the elements may comprise at least one of: an upper element, constituting the topsheet, a lower element, constituting the backsheet, intermediate elements and an adsorbent core, such elements being at least partially overlaid and constrained between each other by one or more welds.

The intermediate elements preferably comprise front and/or rear wings of the adsorbent hygiene article. Alternatively, the intermediate elements may comprise further components, such as for example capture and distribution layers or reinforcing layers or other discrete elements typically provided in adsorbent hygiene articles between topsheet and backsheet.

Preferably, within the production line, the articles can be moved along an advancement direction.

The production line preferably comprises a conveyor belt.

Preferably, the conveyor belt can be moved along the advancement direction for the movement of the articles being processed within the production line.

The conveyor belt can have a flat or curved lying surface.

The advancement direction can be straight or circular.

The lying surface of the conveyor belt may correspond to the support surface of the control apparatus or may be distinct therefrom.

The production line preferably comprises feeding devices adapted to feed said one or more elements of the article and to lay them on the conveyor belt.

Preferably, said one or more elements are fed in tape form.

Preferably, in the case of more elements, the feeding devices are adapted to feed these elements in form of tapes (more preferably continuous) and to lay them, at least mutually overlaying them, on the conveyor belt.

Preferably, in the case of one element, the feeding devices are adapted to feed that element in form of tape (continuous or discrete) and to lay it on the conveyor belt with at least two portions of the tape mutually overlaying it.

In the production line, the fixing device is placed downstream of said feeding devices, with respect to the advancement direction.

In one embodiment, in the case of more elements, the fixing device is adapted to perform such welds to weld between them the tapes laid on the lying surface of the conveyor belt by the feeding devices. Preferably, in the case of continuous tape laying, a continuous tape assembly is defined.

In one embodiment, in case of one element, the fixing device is adapted to perform said welds in order to weld between them said two portions of the tape laid on the conveyor belt.

Preferably, the fixing device is an ultrasonic device. This type of welding allows the materials of the elements of the article to be melted together in a precise and localised way.

In an alternative embodiment, the fixing device can be configured to perform a thermomechanical welding.

The production line preferably comprises a cutting device adapted to subject the aforesaid continuous tape assembly to a cutting operation that is repeated at regular and predetermined time intervals in order to obtain the articles.

In the production line, the control apparatus is arranged downstream of said fixing device, with respect to the advancement direction.

In the production line, the control apparatus can be arranged downstream or upstream of said cutting device, with respect to the advancement direction.

Further characteristics and advantages of the present description will become clearer from the following detailed description of the preferred embodiments thereof, with reference to the appended drawings and provided by way of indicative and non-limiting example, in which:
- figure 1 schematically shows an example of an adsorbent hygiene article;
- figure 2 schematically shows a control apparatus according to an embodiment of the invention;
- figure 3 schematically shows a line for producing an adsorbent hygiene article according to an embodiment of the invention.

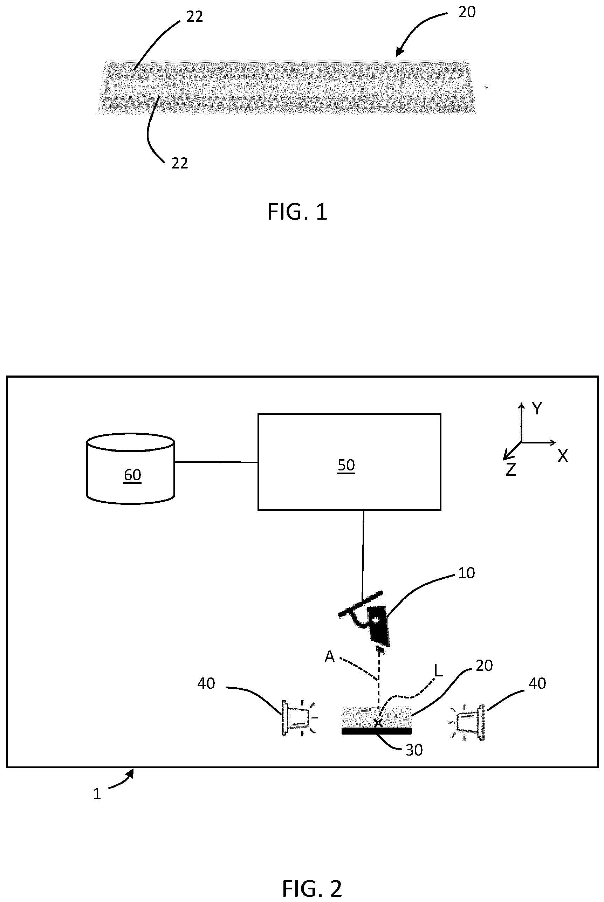

Figure 1 schematically shows an example of an adsorbent hygiene article 20 to which the control method according to the present invention may be applied.

The adsorbent hygiene article 20 may be, for example, a baby nappy or a pad for incontinent persons and the like.

The adsorbent hygiene article 20 typically has a front part, wearable on the front part of the user's body, a back part, wearable on the back part of the user's body, and a central part arranged between the front part and the back part and wearable between the user's legs.

Structurally, the adsorbent hygiene article 20 comprises at least two primary elements extending longitudinally from the front part to the back part of the adsorbent hygiene article 20. The primary elements include an upper element (represented by the upper layer visible in figure 2) and a lower element (not visible in figure 2), called respectively "topsheet" and "backsheet" in the jargon of the sector, overlaid and constrained between each other. Both the upper element and the lower element are substantially rectangular in shape.

The upper element is overlaid on the lower element and is configured to be arranged in a position contiguous to the user's body when the adsorbent hygiene article is worn by the latter. The upper element comprises a central portion which, in use, comes into contact with the skin of the user, or close to it, so as to form an empty interspace between the adsorbent hygiene article and the body of the user. The central portion is configured to receive body waste and is made of a material permeable to body fluids. The upper element may also comprise two side strips, also called "standing gather", configured to ergonomically encircle the user's legs so as to reduce the clearance between the adsorbent hygiene article and the user's body. The side strips may be made of a soft material adapted to come into contact with the user's skin, for example a non-woven tissue. The upper element may further comprise elastic elements coupled to the side strips in order to further reduce the aforesaid clearance, thus reducing the risk of body waste escaping from the aforesaid interspace.

The lower element comprises a layer that is impermeable to body fluids, e.g., made of polyethylene or bioplastic. The lower element may incorporate an additional reinforcing layer associated with the impermeable layer and configured to improve the tear resistance of the adsorbent article. The lower element may also incorporate one or more aesthetic components configured to externally cover the adsorbent hygiene article when worn.

An adsorbent core (not visible in figure 2) is placed between the upper element and the lower element. This adsorbent core has the function of absorbing the body fluids that pass through the upper element and of retaining them without loss even for several hours. The adsorbent core comprises one or more super-adsorbent polymers (SAP), e.g., sodium polyacrylate, normally in granular form, arranged within a cellulose or other similar fibre covering.

Intermediate elements (not visible in figure 2) can be placed between the upper element and lower element. For example, a capture and distribution element can be placed between the upper element and the adsorbent core. The capture and distribution element is configured to receive the body fluids passing through the upper element and to distribute them on the adsorbent core quickly and evenly, so as to move these fluids away from the user's skin and improve comfort. For this purpose, the capture and distribution element is made of a material that is permeable to body fluids and configured to rapidly capture and distribute these fluids. For example, the capture and distribution element may be made of a non-woven tissue comprising in whole or in part cellulose fibres, polyester fibres or the like. In fact, the capture and distribution element provides a physical separation between the upper element and the adsorbent core, preventing the fluids contained in the adsorbent core from wetting the upper element. The capture and distribution element may be fixed to the upper element, in which case, for the purposes of this patent application, it is considered an integral part of the upper element.

Additional intermediate elements, such as wings (or side panels), are arranged between the upper element and the lower element. These wings are fixed to both the upper element and to the lower element so that they project cantilevered laterally from these elements. Typically, there is a pair of front wings fixed to the front part of the adsorbent hygiene article and a pair of rear wings fixed to the back of the adsorbent hygiene article. Each front wing is configured to be reversibly coupled, e.g., by means of adhesives or Velcro or the like, to a respective rear wing, so as to encircle the pelvis or the waist of the user and firmly and comfortably fix the adsorbent hygiene article to his body. The wings can be made of elastic, tensile-resistant materials.

In the adsorbent hygiene article 20, the upper element, the lower element, the adsorbent core and the intermediate elements are generally made of a polymeric material. In addition, they are made at least partly of a tissue or non-woven tissue.

In the adsorbent hygiene article 20, the upper element, the lower element, the adsorbent core and the intermediate elements are, at least in part, constrained between each other by means of appropriate welds, schematically illustrated in figure 2 with an overall texture indicated by the numerical reference 22.

In the case of polymeric material and, in particular, in the case of woven or non-woven tissue, the welds 22 have a texture in which the welding spots are clearly visible, even to the naked eye. In the case of ultrasonic welding 22, for example, the welding spots correspond to the raised pin position of a mould ("anvil") used to make the weld in cooperation with a sonotrode.

Figure 2 shows a control apparatus 1 according to an embodiment of the invention, adapted to control the quality of the welds 22 in the adsorbent hygiene articles 20 on the basis of a quality parameter.

The apparatus 1 is configured so as to implement a control method according to an embodiment of the present invention.

In a preferred embodiment, the control apparatus 1 is adapted to control the quality of the welds 22 in the adsorbent hygiene articles 20 in terms of the maximum stress (preferably, tensile strength) that the weld is capable of withstanding until failure.

The apparatus 1 comprises a support surface 30 for the adsorbent hygiene article 20.

The support surface 30 for the adsorbent hygiene article 20 can be flat or curved.

The support surface 30 is preferably movable along a working direction. In the embodiment illustrated, the working direction L is perpendicular to the XY plane of figure 2 (i.e., parallel to the Z axis of figure 2). The working direction L can be straight or circular.

The support surface 30 for the adsorbent hygiene article 20 may be defined by a flat surface of a flat conveyor belt or by a curved surface of a forming support. The forming support may comprise, for example, a drum rotatable about a rotation axis. In this case, the support surface 30 is defined by a cylindrical surface of the drum.

The apparatus 1 comprises an image acquisition device 10 configured to acquire images of the adsorbent hygiene article 20 and a processor 50 configured to process the acquired images.

In particular, the image acquisition device 10 is configured to acquire images of different portions of the adsorbent hygiene article 20 as it advances, above the support surface 30, along the working direction L.

Preferably, the image acquisition device 10 comprises a digital camera, for example comprising a CCD or CMOS sensor (not illustrated).

The camera can be in colour or black and white.

For example, the image acquisition device 10 is a two-dimensional digital camera adapted to provide a two-dimensional digital image composed of a pixel matrix.

Preferably, the image acquisition device 10 faces the support surface 30 of the adsorbent hygiene article 20.

Preferably, the image acquisition device 10 has an optical axis A substantially perpendicular to the support surface 30 of the adsorbent hygiene article 20. In the case of a curved support surface, it is understood that the optical axis A is substantially perpendicular to a plane tangent to the support surface 30, at the point where the optical axis A meets said support surface 30.

Preferably, the image acquisition device 10 is positioned above the support surface 30 at a distance (along the Y axis) such that a definite and complete image of at least a portion of the adsorbent hygiene article 20 positioned on the support surface 30 can be acquired.

Preferably, the image acquisition device 10 has a fixed (non-changeable) position so that the image acquisition setup can be kept constant for each control.

The apparatus 1 also comprises a lighting system.

The lighting system can emit visible, infrared and/or ultraviolet light.

For example, the lighting devices 40 are white LEDs.

The lighting system can emit continuous or pulsed light.

Preferably, lightening is achieved by intermittent light (also known as "flash"); in this way, the image capture will be consistently synchronised with the intermittent lighting, reducing a possible smearing effect.

As schematically illustrated in figure 2, the lighting system preferably comprises lighting devices 40 placed on two opposite sides of the support surface 30 with respect to the working direction L of the support surface 30.

Preferably, the lighting devices 40 have a fixed (non-changeable) position so that the lighting setup can be kept constant for each control.

Preferably, the lighting devices 40 are placed above the support surface 30, at the same height (along the Y axis) with respect thereto.

Preferably, the lightening devices 40 are configured and positioned so as to illuminate the adsorbent hygiene article 20 resting on top of the support surface 30 according to light beams parallel to a plane on which the support surface 30 lies (in the case of a flat support surface 30) or to a plane tangent to the support surface 30 at the point where the optical axis A meets said support surface 30 (in the case of a curved support surface 30).

Preferably, the lighting devices 40 are configured and positioned to illuminate in a grazing and even way the adsorbent hygiene article 20 resting on top of the support surface 30.

In one embodiment (not illustrated), the lighting devices may be configured and positioned to evenly backlight the adsorbent hygiene article 20 according to a direction substantially perpendicular to the article 20. In this case, the support surface 30 may be made of a transparent material or may be absent.

The processor 50 is configured so as to implement a control method according to one embodiment of the present invention.

In particular, the processor 50 is configured to process each image acquired (or combination of more images acquired) by the image acquisition device 10 through a specific processing algorithm that is adapted to:
- recognise weld zones in the acquired image,
- extract image data related to recognised weld zones,
- assess a quality parameter of the weld, relating the image data extracted to respective tightness stress values of the weld.

In particular, in a preferred embodiment of the processing algorithm, the acquired image is represented by a pixel matrix, wherein each pixel is associated with a pair of coordinates (representing the row and column indices of the matrix) and a grey-level intensity value of the pixel, typically 256 levels or tones from 0 (black) to 255 (white).

According to the processing algorithm, the recognition of the weld zones in the acquired image may comprise - according to a first embodiment - filtering operations.

According to these filtering operations, each column of the matrix can be filtered individually with a characteristic value for the same column. The operation thus carried out allows to obtain an image without the inhomogeneities that characterize the texture of the welds 22.

The filtering operations can also comprise an iterative filtering of the acquired image by which the whole image is filtered with respect to a threshold parameter, representative of weldless zones.

For example, the filtering operations are adapted to increase and unify the intensity level of the pixels that, in the acquired image, correspond to the weldless zones, for example by making white - through the application of appropriate filters - the pixels related to the weldless zones so as to increase the contrast with the darker pixels (with lower intensity grey levels, close to zero) that, in the acquired image, correspond to the weld zones.

The filtering operations thus make it possible to increase the contrast, in terms of pixel intensity level, between weld and weldless zones in the acquired image.

According to the first embodiment, at the end of the iterative filtering, mathematical morphology functions are envisaged which are adapted to eliminate any disturbing element and to clearly locate (i.e., identify the position with respect to a coordinate system of the matrix) each weld zone within the pixel matrix. In this case, given that the application of mathematical morphology functions acts on the intensity of the pixels by modifying their original value, the image obtained from such processings, in which the weld zones are well localised, is used as a template to be applied to the original image in order to localise the weld zones in it.

In a second embodiment alternative to the first one, instead of the aforesaid filtering operations and application of mathematical morphology functions, the recognition of the weld zones in the acquired image comprises a localisation operation (identification of the position with respect to a coordinate system of the matrix) of each weld zone within the original pixel matrix. In particular, within the original pixel matrix, a weld zone (or area) is localised at each welding spot.

This localisation can be carried out on the basis of the intensity of the pixels (for example, using appropriate thresholds considering that the welding spots generally correspond to darker pixels with lower intensity grey levels, close to zero) and on the basis of information related to the welding pattern (for example, in the case of ultrasonic welding, this pattern is defined by the position and conformation of the anvil pins). However, in the case of a curved support surface 30, correction algorithms can be applied to take account of the fact that the image acquired is related an article resting on a curved surface.

According to the processing algorithm, once the weld zones have been localised within the pixel matrix according to the first or second embodiment described above, data related the intensity levels of all pixels corresponding to these weld zones are extracted. This extraction can be done by considering the pixel matrix in its entirety. Alternatively, the acquired image may be subdivided into a plurality of predefined areas (e.g., corresponding to different areas of the adsorbent hygiene article conventionally subjected to conventional tensile tests) and the extraction of data related to the intensity levels of the pixels is done for each of said plurality of predefined areas.

Once the intensity levels of these pixels have been extracted, a single average intensity level is calculated for the pixel matrix in its entirety or more average intensity levels, one for each of said plurality of predefined areas.

As mentioned above, as a result of his investigations, the Applicant has found that there is a correspondence between the intensity level of the pixels related to the weld zones in the image and the strength of the welds in terms of the tightness stress thereof. In particular, the Applicant has found that the darker the pixels related to the weld zones, the stronger the weld in terms of maximum tensile strength the weld can withstand until failure.

On the basis of the Applicant's findings, according to the processing algorithm, the average intensity level obtained for the pixel matrix in its entirety (or the average intensity levels obtained for said plurality of predefined areas) is therefore related (are therefore related), by means of appropriate correlation curves, to a respective value(s) of tightness tensile strength; said tightness tensile strength value(s) representing an assessment of the quality parameter of the welds 22 with respect to the adsorbent hygiene article 20.

In the case of processing more images with respect to the same adsorbent hygiene article 20, the tightness tensile strength values obtained for the various images may be used to assess an overall quality parameter of the welds 22 related to that adsorbent hygiene article 20.

For example, the overall quality parameter can be assessed as the average value of all the values obtained.

Preferably, the aforesaid correlation curves, which allow to associate a respective tightness tensile strength value to each pixel intensity level, can be obtained by means of a suitable calibration procedure. Such a calibration procedure may involve, for example, acquiring images of a multitude of sample adsorbent hygiene articles under the same conditions as those acquired by the apparatus 1 described above, and then performing conventional tensile tests on such sample adsorbent hygiene articles in order to obtain - in a conventional way - experimental values of the tightness tensile strength of the welds present therein. Then, according to the procedures described above, an average intensity level is calculated for the pixel matrix in its entirety or for each of said plurality of predefined areas, considering only the pixels corresponding to the localised weld zones. The calculated average intensity level is associated with the experimental values of tightness tensile strength obtained from the tensile tests. The various associations obtained are then used to define the aforesaid correlation curves, for example by using appropriate regression techniques.

The apparatus 1 also comprises a database 60 in communication with the processor 50.

The database 60 is preferably configured to store and historicise the quality parameter values assessed over time by the processor 50 for a multitude of hygiene articles 20.

The database 60 and/or the processor 50 may be connected (e.g., by a wired or wireless or mixed connection) to a remote terminal (not illustrated) which may be used, for example, for displaying the data stored in the database 60.

The values stored in the database 60 can be transmitted again to the processor 50 (or to the remote terminal) for their reprocessing, for example in order to evaluate the trend over time of the assessed values of the quality parameter and intervene on a line for producing the adsorbent hygiene articles 20 (for example on the fixing device prepared for welding the elements of the adsorbent hygiene article 20) if these values fall below a predetermined threshold. This makes it possible to intervene promptly on the production line when the welds begin to show defects and/or deviations from the optimal condition.

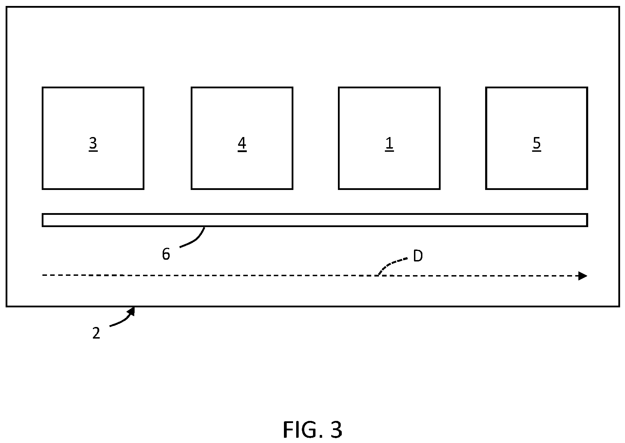

As schematically illustrated in figure 3, the apparatus 1 may be mounted within a line 2 for producing adsorbent hygiene articles 20 in order to carry out in-line controls of the quality of the welds made between elements of the adsorbent hygiene articles 20 produced.

As mentioned above, this advantageously allows to intervene promptly on the production line 2 when the welds of the adsorbent hygiene articles 20 begin to show defects and/or deviations from the optimal condition, and to carry out a real-time control on all the adsorbent hygiene articles 20 produced by the line 2 in order to keep only those that conform for sale and to discard the defective ones.

Preferably, the line 2 comprises a conveyor belt 6.

Preferably, the line 2 comprises feeding devices 3 adapted to feed the elements of the adsorbent hygiene article 20 in form of continuous tapes (not illustrated) and to lay them, at least mutually overlaying them, on the conveyor belt 6.

These elements may be the upper element, the lower element, the intermediate elements and the adsorbent core described above.

The conveyor belt 6 can be moved along an advancement direction D for moving the adsorbent hygiene articles 20 being processed within the production line 2.

In the embodiment illustrated in figure 3, the conveyor belt 6 has a flat lying surface with a straight advancement direction D.

In an alternative embodiment (not illustrated), the conveyor belt 6 has a curved lying surface with a circular advancement direction D. In particular, the conveyor belt is defined by a forming support such as, for example, a drum rotatable around a rotation axis. In this case, the lying surface is defined by the cylindrical surface of this drum.

Downstream of the feeding devices 3, with respect to the advancement direction D, the production line 2 comprises a fixing device 4, configured to weld between each other, by means of one or more welds 22, the tapes laid on the lying surface of the conveyor belt 6 by the feeding devices 3 so as to define a continuous tape assembly.

Preferably, the fixing device 4 is an ultrasonic welding device. Preferably, the fixing device 4 comprises a sonotrode and an anvil (not illustrated), the sonotrode being made to vibrate at a frequency comprised between 15 kHz and 25 kHz.

Downstream of said fixing device 4, line 2 comprises a control apparatus 1 according to the invention, adapted to control -as described above- the quality of the welds 22 made by the fixing device 4 for each adsorbent hygiene article 22.

In the illustrated embodiment, the lying surface of the conveyor belt 6 also serves as a support surface for the control apparatus 1. However, an alternative embodiment may be provided in which the lying surface of the conveyor belt 6 is distinct from the support surface 30 of the control apparatus 1.

The image acquisition device 10 and/or the database 40 and/or the processor 50 described above for the control apparatus 1 may be dedicated devices for said control apparatus 1 or shared with other apparatuses/devices of the line 2.

Downstream of said fixing device 4, the production line 2 also comprises a cutting device 5 adapted to make transverse cuts or weakening lines (with respect to the advancement direction D) on the continuous tape assembly, so as to be able to subsequently separate or make easily separable the adsorbent hygiene articles 20.

Although in the embodiment illustrated in figure 3, the control apparatus 1 is arranged upstream of said cutting device 5, there is also provided an embodiment (not illustrated) in which the control apparatus 1 is instead arranged downstream of said cutting device 5.

In the embodiment illustrated in figure 3, in which the control apparatus 1 is arranged upstream of the cutting device 5, the processor 50 is preferably configured to identify the welds 22 belonging to the various adsorbent hygiene articles 20 within the continuous tape assembly so as to be able to assess the quality parameter of the welds 22 for each adsorbent hygiene article 20. This may be done, for example, by processing appropriate information on the positions, at the conveyor belt 6, of the cuts made by the cutting device 5 on the continuous tape assembly.

It should be noted that although Figures 1 to 3 also refer to an article made of a polymeric material in form of an adsorbent hygiene article, the aforesaid description applies in much the same way to other types of articles made of a polymeric material such as containers or wraps for food products.

As will become clear from this description, the advantages of the invention in its various aspects are manifold.

In particular, thanks to the invention, it is possible to assess the quality of the welds in the articles made of a polymeric material, in terms of the tightness stress of the same, without having to intervene mechanically and manually on the articles by means of conventional tensile tests.

This advantageously allows to test, in-line and in an automated way, all the articles produced by the production line without limiting oneself to sample articles since the required method is not invasive and provides for processing times of the acquired images lower than the execution times of conventional tensile tests. It is therefore possible to have real-time information on the quality of the welds of the articles produced and, therefore, to intervene promptly on the production line when they begin to show defects and/or deviations from the optimal condition.

In addition, thanks to the use of a machine vision-based control method for assessing the tightness stress of welds in the articles made of a polymeric material it is possible to identify defects and/or deviations from the quality standards that are not directly attributable to welding process parameters.

## Claims

1. A method for controlling a weld (22) in an article (20) made of a polymeric material, comprising:
- acquiring an image of at least a portion of the article (20),
- processing the acquired image represented by a pixel matrix wherein a level of intensity is associated to each pixel, the processing comprising:
• recognising weld zones in the acquired image,
• extracting image data related to pixel intensity levels which correspond to the recognised weld zones,
• assessing a quality parameter of the weld (22), relating the image data extracted to respective tightness stress values of the weld (22).

2. The method according to claim 1, comprising lighting, in a grazing and even way, the article (20) while acquiring the image.

3. The method according to claim 1 or 2, wherein the image data extracted comprise at least an average intensity level of the intensity levels of the pixels which correspond to the weld zones recognised for the image acquired in its entirety or for a predefined area of the image acquired.

4. The method according to any one of the preceding claims, wherein the tightness stress values of the weld (22) are related to a tightness tensile strength of the weld (22).

5. The method according to any one of the preceding claims, wherein the article (20) comprises one or more elements and the weld (22) is adapted to constrain at least part of said elements or more portions of a same element between each other.

6. The method according to any one of the preceding claims, wherein the article (20) is an adsorbent hygiene product or a container or wrap for food products.

7. The method according to any one of the preceding claims, wherein the article (20) comprises at least an element made of a tissue or of a non-woven tissue.

8. The method according to any one of the preceding claims, wherein the weld (22) is an ultrasonic weld.

9. An apparatus (1) for controlling a weld (22) in an article (20) made of a polymeric material, comprising an image acquisition device (10) configured to acquire an image of at least a portion of the article (20) and a processor (50) configured to process the image acquired represented by a pixel matrix, wherein an intensity level is associated to each pixel, such to:
- recognise weld zones in the acquired image,
- extract image data related to the pixel intensity levels which correspond to the recognised weld zones,
- assess a quality parameter of the weld (22), relating the image data extracted to respective tightness stress values of the weld (22).

10. The apparatus (1) according to claim 9, comprising a support surface (30) for the article (20).

11. The apparatus (1) according to claim 10, wherein the image acquisition device (10) has an optic axis (A) that is substantially perpendicular to the support surface (30).

12. The apparatus (1) according to any one of claims 9-11, comprising a lighting system with lighting devices (40) configured so as to obtain a grazing and even lighting of the article (20).

13. A line (2) for producing articles (20) made of polymeric material comprising a fixing device (4) configured to perform welds (22) in the articles (20) and a control apparatus (1), wherein the control apparatus (1) comprises:
- an image acquisition device (10) configured to acquire images of at least a portion of each article (20), and
- a processor (50) configured to process said acquired images so as to assess, for each article (20), a quality parameter of the welds (22) performed by the fixing device (4) in terms of tightness stress of the welds (22).

14. The line (2) according to claim 13, further comprising a conveyor belt (6) and feeding devices (3) adapted to feed elements of the article (20) in form of tapes and to lay them, at least mutually overlaying them, on the conveyor belt (6), the fixing device (4) being adapted to perform said welds (22) to weld the tapes laid down between each other on the lying surface of the conveyor belt (6).

15. The line (2) according to claim 13, also comprising a conveyor belt (6) and feeding devices (3) adapted to feed an element of the article (20) in form of a tape and to lay it down in the conveyor belt (6) with at least two portions of the tape being mutually overlaid, the fixing device (4) being adapted to perform said welds (22) to weld said at least two portions of the tape between each other.
